# EUROPEAN PATENT APPLICATION

(11) **EP 1 720 223 A1**
(43) Date of publication of application: **08.11.2006**
(21) Application number: 05009990.2
(22) Date of filing: 07.05.2005
(51) Int. Cl.: H01S 3/067, H01S 3/098

(54) **Environmentally stable self-starting mode-locked waveguide laser and a method of generating mode-locked laser pulses**

(71) Applicant: Aarhus Universitet, 8000 Aarhus C (DK)
(72) Inventor: Nielsen, Carsten, Krogh, 8200 Arhus N (DK)
(74) Representative: Nielsen, Leif

(57) **Abstract**

An environmentally stable mode-locked waveguide laser system (1,2) where the ability to lase in continuous wave (CW) operation has been intrinsically suppressed as a solution to the cavity independently of other types of lasing (e.g. mode-locked lasing). As a result, environmentally stable mode-locked lasing is obtained where mode-locked lasing cannot be lost to CW lasing. The laser (1) can yield high pulse energy at low repetition rate.

## Description

The present invention relates generally to laser systems with high peak power and low repetition rates. Especially, it relates to a passively mode-locked waveguide laser system and a method for passively mode-locked lasing. The invention may be used in areas such as laser surgery, laser marking, and laser micro machining, where a laser with relatively high peak power and/or relatively high pulse energy is needed.

### BACKGROUND OF THE INVENTION

Fiber lasers have a huge potential as high power mode-locked laser sources, and within the last years, fiber lasers have taken a large step toward a point, where they are attractive alternatives to the traditional solid state lasers used e.g. in the heavy industry. The favoured configuration is a combination of a Master Oscillator and a large-mode-area (LMA) fiber amplifier.

If fiber lasers are to compete with traditional lasers, they must be proven to function well under conditions found outside laboratory environments. In other words, it is important to have an environmentally stable laser.

Traditionally, short-pulsed lasers are divided into two categories: Q-switched and mode-locked. A Q-switched laser implies that the laser delivers a train of pulses, where the spacing between the pulses is not necessarily defined by the roundtrip time of the laser. As subsequent pulses build up independently from each other, variations from pulse to pulse in shape, amplitude and duration can occur. In a mode-locked laser, a mode-locked pulse train is characterised by a pulse spacing defined by the roundtrip time of the laser. Each pulse is created from a smaller or larger part of the previous pulse, usually causing a more stable pulse train. Shorter pulses, for example with durations of 10 fs ― 500 ps, can typically be obtained from a mode-locked laser, whereas a Q-switched laser typically generates pulses with durations in the 500 ps ― 10 µs regime.

Well known in the art are actively mode-locked lasers, for example with acousto-optic or electro-optic modulators that lead to creation of pulses synchronised with the modulation, as well as passively mode-locked lasers where mode-locking is obtained through an interaction with a passive component, for example using a saturable absorber. Shorter pulses can be obtained in passively mode-locked lasers, as the pulse length is not limited by the speed of an electrically driven component. Various different configurations of passively mode-locked fiber lasers exist, among which, lasers with saturable absorbers as the mode-locking mechanism commercially have been the most successful. The latter are commercially available, for example at IMRA (Institut Minoru de Recherche Avancée), Ann Arbor, Michigan 48105, USA. Also, lasers based on non-linear polarization rotation have been widely used, especially in laboratories, for example the ring-laser or the "figure of eight laser", both described by H. A. Haus et al. in "Additive-Pulse Modelocking in Fiber Lasers", IEEE J. Quant. Elect., Vol. 30, No. 1 (1994) pp. 200-208, and the IMRA Kerr-type mode-locked laser, for example described by M. E. Fermann and Harter in "Environmentally stable passively modelocked fiber lasers pulse source", US patent No 5,689,519 and 5,923,686 assigned to IMRA, and by M. E. Fermann et al. in "Environmentally stable Kerr-type mode-locked Erbium fiber laser producing 360-fs pulses", Opt. Lett. Vol. 19, No. 1 (1994) pp 43-45, and in "Passive mode-locking using non-linear polarization evolution in a polarization maintaining erbium-doped fiber", Opt. Lett. Vol. 18, No. 11 (1993) pp. 894-896. Ring-lasers are also commercially available, for example from the company Thorlabs.

A mode-locked laser may be self-starting ― that is it may automatically be able to start up with a pulsed output when the pump power is turned on. In all disclosed self-starting mode-locked lasers, pulsed operation is initiated as a fluctuation on top of a large CW (Continuous Wave) background. A fluctuation with large enough peak power can evolve into a stable mode-locked output, as disclosed in the aforementioned reference H. A. Haus et al. in "Additive-Pulse Modelocking in Fiber Lasers", IEEE J. Quant. Elect., Vol. 30, No. 1 (1994) pp. 200-208. If the right conditions are present, the fluctuation may evolve out of noise, and the laser is then said to be self-starting, which has been discussed in H. A. Haus and E. P. lppen in "Self-starting of passively mode-locked lasers", Opt. Lett., Vol. 16, No. 17 (1991) pp. 1331-1333. As a large CW background is needed to start the laser, CW must also be a good solution to the cavity and, hence, a pulsed solution will always be in sharp competition with the CW solution. This causes a problem for such systems, as minor environmentally induced changes may cause the CW operation to be favourable and cause the pulsed operation to cease. Therefore, systems as disclosed in prior art often suffers from environmental instability. However, environmental stability is highly desired for industrial application. Therefore, if a fiber-based, mode-locked laser is to have broad commercial value, it must be environmentally stable ― that is substantially immune to environmental influences such as temperature drifts and pressure variations.

The above-mentioned ring-laser further suffers from the drawback that it cannot be implemented as an environmentally stable solution towards changes of the polarization evolution, because environmental changes of the birefringence changes both the linear and non-linear polarization evolution and cannot be compensated with this configuration.

Saturable absorber mode-locked lasers can obtain higher environmental stability towards changes of the polarization evolution, if they are implemented in polarisation maintaining (PM) fibers without polarization evolution. However, they still suffer from the intrinsic environmental instability towards loosing mode-locked lasing to CW lasing.

In US patent No. 5,689,519 and 5,923,686 by Fermann and Harter assigned to IMRA, a mode-locked fiber laser based on non-linear polarization evolution involves an improvement towards environmental stability for a laser based on non-linear polarisation rotation. This Kerr type mode-locked laser obtains environmental stability toward changes of the polarization evolution, with the use of a Faraday mirror. To enable CW lasing as a good solution to the cavity, a Faraday rotating element is placed between the polarizer and the Faraday mirror. The Faraday rotating element removes the effect of the Faraday mirror in the section between the Faraday rotating element and the polarizer. Wave plates placed in this section are used to ensure high reflectivity at low power levels, allowing the laser to start up with CW lasing. The Faraday rotating mirror only removes environmental instability in the section between the Faraday rotating mirror and the Faraday rotating element. To obtain environmentally stability toward change of the polarization evolution, the fiber between the Faraday mirror and the Faraday rotating element has to be a PM fiber. Changes of the birefringence of a non-PM fiber will affect the non-linear polarization evolution. The section between the Faraday rotating element and the polariser has to be free space in order to keep environmental stability. Otherwise, if a fiber were placed in his section, environmental induced changes in the birefringence of the fiber would make the laser environmentally unstable, as the Faraday mirror does not compensate for polarisation changes in this section. However, as the laser beam in this system has to pass sections of free space inside the laser cavity, environmental influence such as air convection due to temperature instability can disturb the proper function of the laser, which is an undesired disadvantage. Furthermore, the free space section requires cleaning and readjustment on a regular basis for optimal performance. This is an additional disadvantage, as it is desirable for commercial systems that the laser is implemented in a way that does not require any maintenance such as cleaning and readjustment. This system also suffers from the intrinsic environmental instability towards loosing mode-locked lasing to CW lasing.

### DESCRIPTION OF THE INVENTION

The object of the invention is to provide a laser system with environmental stability towards loosing mode-locked lasing to CW lasing.

This object is achieved by a laser system and a method according to the independent claims.

The passively mode-locked laser system according to the invention comprises
- an optical waveguide for propagating light along a longitudinal axis of the waveguide,
- a gain medium over a length of the optical waveguide for emitting light in the optical waveguide in response to stimulation by pump light,
- a pump for generating energy in the form of pump light, the pump optically connected to the gain medium for transfer of pump light into the gain medium,
- a laser cavity enclosing the gain medium between a first and a second reflector,
- at least the first reflector being a non-linear optical power reflector with a reflectivity increasing with the power level of the impinging light,
- the pump, the optical waveguide with the gain medium, and the first and second reflectors being configured in combination to have a power gain which is smaller than the power loss at power levels corresponding to CW lasing modes in order to prevent CW lasing,
- means for generating a light pulse without the presence of CW lasing, the light pulse having a peak power above a predetermined threshold value,
- the pump, the optical waveguide with the gain medium, and the first and second reflectors in combination being configured to have a power gain which is higher than the power loss at power levels above the predetermined threshold value in order to provide mode-locked lasing,
- the means for generating a light pulse being configured to cease generation of light pulses in the presence of mode-locked lasing.
   The method for generating pulsed laser light according to the invention includes providing a passively mode-locked laser system comprising
- an optical waveguide for propagation of light along a longitudinal axis of the waveguide,
- a gain medium over a length of the optical waveguide,
- a laser cavity enclosing the gain medium between a first and a second reflector,
- at least the first reflector being a non-linear optical power reflector with a reflectivity increasing with the power level of the impinging light,
wherein the method further comprises
- pumping the gain medium by light from a pump for stimulated emission of light into the optical waveguide,
- preventing CW lasing by providing a power gain in the laser system that on the one hand is smaller than the power loss at light power levels corresponding to CW lasing modes, including a non-linear power loss at the first reflector, and that on the other hand is higher than the power loss at light power levels above a predetermined threshold value,
- generating a light pulse without the presence of CW lasing, the light pulse having a peak power above the predetermined threshold value in order to provide mode-locked lasing.

The invention provides a passively mode-locked laser where CW lasing is suppressed at all times and not only in the presence of mode-locked lasing. As mode-locked lasing is never less favourable than CW lasing, this prevents a ceasing of the mode-locked lasing due to environmentally induced changes that make CW lasing more favourable. This means that the laser according to the invention is environmentally more stable than prior art with respect to loosing mode-locked lasing to CW lasing. Another factor that enhances environmental stability is the fact that it contains no section of free space, where air convection may influence the stability.

The predetermined threshold value for the light pulse peak power may be an empiric value that can be found as a power level above those power levels that corresponds to CW lasing modes. This means that the predetermined threshold value is a level below which the pump, the optical waveguide with the gain medium, and the first and second reflectors in combination have a power gain that is smaller than the power loss. This predetermined threshold value may also be calculated by standard methods of laser simulations using rate equations, for example as disclosed by A. Ghatak et al. in "Introduction to fiber optics" Academic Press, 1998 or by Raymond J. Beach et al. in "Narrow-line Ytterbium fiber master-oscillator power amplifier", J. Opt. Soc. Am. B, Vol. 19, No. 5 (2002) pp. 981-991.

The invention is suitable for an all-solid-state solution for a laser system. In the present context, the term 'an all-solid-state solution' is taken to mean that the laser only comprises all fiber elements and fiber pig-tailed components, so that there are no sections of free space, such as air space, inside the laser. For example, the gain medium is optically connected to the first and second reflector through light fibers.

The suppression of CW lasing is achieved by letting the non-linear optical reflector have a sufficiently low reflection at power levels that can be obtained in a CW mode of the laser with a given gain medium and pump power, that the total power loss for the CW mode after one roundtrip in the cavity is higher than the total gain. The power loss includes loss at interfaces between components and loss due to coupling of light out of the cavity. The CW mode will not experience an effective amplification during one roundtrip and hence a steady-state CW laser field will not be able to build up inside the cavity. As a consequence CW lasing will be suppressed even without the presence of other types of lasing, e.g. mode-locked lasing. In contrast, in other mode-locked lasers CW lasing is only suppressed in the presence of mode-locked lasing.

Further, the reflectivity of the non-linear optical reflector increases above what is necessary for lasing in the presence of a pulse with high peak power.

The embodiments of the invention include novel ways of self-starting mode-locked operation without the presence of CW lasing. The means of generating a pulse without the presence of CW lasing initially allows the generation of a pulse with high peak power. When the pulse reaches the non-linear optical reflector at one end of the cavity, a part of the pulse is reflected back into the cavity. Due to the increased reflectivity of the non-linear optical reflector at high peak power, the total power loss will now be lower than the optical gain in the gain medium, and the pulse will experience an effective amplification after one roundtrip, and return to the non-linear optical reflector. In this way a mode-locked pulse train can be created.

The means of generating a light pulse without the presence of CW lasing may be achieved by accumulating energy in said gain medium to an amount that gives rise to a total optical gain in said gain medium which is equal to or above the gain needed to generate a pulse through passive Q-switching. Passive Q-switching generates nanosecond pulses, for example with duration of 1-100ns. Passive Q-switching of the cavity can be achieved through a combination of the ability to suppress CW lasing, allowing an initial accumulation of energy in the gain medium, and a cascade of Raylight Backscattering (RB) and Stimulated Brillouin Scattering (SBS) in sections of the waveguide, creating a SBS mirror. The SBS mirror causes an increase of the feedback for optical light into the cavity and through this enabling the generation of a nanosecond pulse. This method has been has been used to create passively Q-switched laser in a variety of different configurations. (cf. e.g. S. V. Chernikov et al. in "Supercontinuum self-Q-switched Ytterbium fiber laser", Opt. Lett., Vol. 22, No. 5 (1997) pp. 298-300, or A. A. Fotiadi et al. in "The Effect of Passive Q-switching Observed in an Erbium-Doped Fiber Laser at a Low Pumping Power", Tech. Phys. Lett., Vol. 27, No. 5 (2001) pp. 434-436, or A.A. Fotiadi et al. in "Dynamics of a self-Q-switched fiber laser with a Rayleigh-stimulated Brillouin scattering ring mirror", Opt. Lett., Vol. 29, No. 10 (2004) pp. 1078-1080). The created pulse drains the gain medium, converting nearly all the accumulated energy into laser power in a single pass, thus creating a pulse with high peak power. Typically a peak power in the order of a 0.1-1kW can be obtained. A new passively Q-switched pulse can only be generated if enough energy is again allowed to accumulate in the gain medium. The energy accumulates at a rate defined by the pumping power, and the time it takes to accumulate enough energy is inversely proportional to the pumping power. Typically it takes in the order of 100 microseconds.

As a mode-locked pulse train is now created, the means of generating a light pulse without the presence of CW lasing will now cease to generate further Q-switched light pulses. A stable mode-locked pulse train may be obtained after that the initial passive Q-switching phase depletes the energy of the gain medium, avoiding the accumulation of energy to a level high enough to induce further passive Q-switching. This can be obtained if the roundtrip time for a mode-locked pulse is much shorter than the time it takes to accumulate the amount of energy needed for passive Q-switching. Typically, repetition rates higher than 100 kHz is enough to ensure that passive Q-switching is substantially suppressed. On the other hand, it is advantageous that the mode-locked pulse does not return before enough energy has again been accumulated in the gain medium, to obtain effective amplification of the pulse after the first roundtrip. Typically, repetition rates lower than 650 kHz are enough to ensure this.

Other means of Q-switching the gain medium can also be used, such as conventional methods of active or passive Q-switching - e.g. with an optical element which initially rapidly increases the reflectivity from one end of the cavity, and subsequently decreases the reflectivity again. Notice that as described above, feedback from the part of the cavity causing initial Q-switching should cease to cause Q-switching as soon as the laser starts to mode-lock.

In a particular embodiment, the effect of cascade RB and SBS is enhanced through interference between two or more RB and SBS elements, for example with the use of a coupler and/or a ring interferometer. This has the advantage of stimulating the creation of higher peak powers.

In summary, the initial start-up processes can be divided into three periods:
1) The pump is turned on, pump light is provided into the gain medium, and energy starts building up in the gain medium. As CW lasing is suppressed, the accumulated energy builds up to an amount giving rise to a total optical gain of the gain medium above a threshold gain level Go needed to initiate passive Q-switching.
2) When the total gain of the gain medium has increased above the threshold gain level Go, passive Q-switching is initiated. If the peak power of the generated pulses is above a peak power threshold value, Pₜₕ, a mode-locked pulse train is created.
3) As lasing has now begun in form of a mode-locked pulse train, the gain of the gain medium now effectively clamps at a value Gₜₕ. Gₜₕ must be smaller then Go to suppress passive Q-switching as soon as the mode-locked pulse train has been created. This is usually automatically obtained, as Go is in the order of the small signal gain of the gain medium and Gₜₕ is equal to the total loss in the cavity, as gain and loss are equal in a steady state lasing situation. The total loss includes the loss in the non-linear optical power reflector, which has now been substantially reduced due to the high peak power of the pulses.

In a particular embodiment, the optical waveguide comprises optical fibres, for example with a core region surrounded by a cladding region. In a particular embodiment, the optical fibre comprises silica.

The non-linear optical power reflector may be accomplished by a single element or by a combination of several elements as also will be illustrated by the various, non-limiting embodiments in the following.

In a particular embodiment, the non-linear optical power reflector comprises a Faraday Mirror, a linear polarizer, and a birefringent non-linear optical power medium between the Faraday mirror and the polariser. Light reflected from a Faraday mirror has the property that it is orthogonally polarized to the light sent into the Faraday mirror. If a Faraday mirror is combined with an arbitrary birefringent medium, in which the incoming light has had an arbitrary polarization evolution, the light reflected back through the birefringent medium will at any point along the medium be polarized orthogonal to the light propagating in the opposite direction (cf. e.g. [M. Martinelli et al.] in "A universal compensator for polarization changes induced by birefringence on a retracing beam", Opt. Comm., Vol. 72, No. 6 (1989) pp. 341-344). However this result is only true as long as the power is low, and no non-linear polarization evolution has taken place. Thus, if a polarizer is combined with an arbitrary birefringent medium and a Faraday mirror, it will work as a non-reflector in the case of low power. On the other hand, if the arbitrary birefringent medium is a piece of fiber where non-linear polarization evolution can take place, the reflection from the Faraday mirror combined with the polarizer will in general be non-zero at high power levels (cf. e.g. [C. Vinegoni et al.] in "Measurements of non-linear polarization rotation in a highly birefringent optical fibre using a Faraday mirror", J. Opt. A:Pure Appl. Opt., Vol. 2 (2000) pp. 314-318). Hence a combination of these elements in the mentioned order can create the non-linear optical power reflector with vanishing reflection at low powers and close to unity reflectivity at higher powers. An advantage is that these elements are commercially available as fiber pig-tailed elements.

A passively mode-locked laser according to the invention may in a further embodiment comprise a configuration of said cavity and said waveguide to obtain environmental stability toward changes of the polarization evolution. Such a configuration can be obtained if the waveguide comprise highly birefringent components, where light is only allowed to be polarized along one of the axes of the birefringent waveguide - e.g. with the use of a polarizer. This configuration, however, eliminates the possibility of using non-linear polarization rotation as the mode-locking mechanism.

In a particular embodiment, the birefringent non-linear optical power medium comprises a polarization maintaining (PM) optical fiber with its axis oriented at a nonzero angle to the axis of the polarizer in order to allow non-linear polarization evolution in the non-linear optical power medium. This has the advantage of enabling an environmentally stable feedback from the non-linear optical power reflector as described in US patent No. 5,689,519 and 5,923,686 by Fermann and Harter assigned to IMRA. The term 'a polarization maintaining (PM) optical fibre' is in the present context taken to mean an optical fibre having a beat length much smaller then the length of the fiber - typically with a birefringence in the order of 1e-5 to1e-3.

In a further embodiment, all fibers in the waveguide are PM fibers for maintaining linear polarisation of the light in all sections except in the non-linear optical power element in order to obtain environmental stability towards changes of the polarization evolution.

The IMRA Kerr type mode-locked laser described in US 5 689 519 and in US 5 923 686 obtains environmental stability toward changes of the polarization evolution, but comprises sections of free space. In the present invention, there are no sections of free space. This is obtained by removing the requirement of CW lasing as a solution to the cavity. As a consequence the laser cannot start up in mode-locked operation in the traditional way, and hence an alternative and novel way of starting the laser is included.

With the implementation of the combination of the Faraday mirror, the birefringent non-linear optical fiber and the polarizer, and with the novel way of starting the laser without the presence of CW lasing presented in this patent, an environmentally stable Kerr type passively mode-locked fiber laser can be obtained. Contrary to the disclosure in US 5,689,519, environmental stability toward a change of polarization evolution is obtained without sections of free space inside the cavity. This is in sharp contrast to the assumption in US 5,689,519 that the use of a Faraday mirror in conjunction with a polarizer without a further Faraday rotating element therein between is not suitable for the implementation into to a Kerr-type mode-locked fiber laser.

In a particular embodiment, the birefringent non-linear optical power medium comprises a non-PM optical fiber and a wave plate. This has the advantage of being an easy implementable solution and with an intrinsic stability toward losing the mode-locked solution as the most favourable solution to the cavity compared to a CW solution. Hence, even though conditions change slightly for mode-locked lasing, the laser will not cease to deliver a mode-locked output. However, PM fibers have to be used if environmental stability towards changes of polarisation evolution is to be obtained.

In a particular embodiment, the non-linear optical power element comprises a saturable absorber with a reflectivity that is dependent on the power of the impinging pulse, preferably with vanishing reflection at low power levels below the predetermined threshold, and a reflectivity increasing to close to unity above the predetermined threshold. This also has the advantage of enabling an environmentally stable solution. Environmental stability toward change of polarization evolution is obtained if the waveguide is highly birefringent and if light is only polarized along one of its axes. As saturable absorber with the above mentioned characteristics, a SESAM (Semiconductor Saturable Absorber Mirror) can be used. A SESAM is generally disclosed in U. Keller et al. "Semiconductor saturable absorber mirrors (SESAM's) for femtosecond and nanosecond pulse generation in solid-state lasers" in IEEE Journal of selected types of quantum electronics, Vol. 2, No. 3 (1996), pp.435-453.

A further, exemplary embodiment includes configurations where both the reflectors in the cavity are non-linear power reflectors. All combinations of above mentioned non-linear power reflectors could be chosen.

There appears to be a general wish in the industry for an environmentally stable fiber based mode-locked laser system having a repetition rate of 100-500 kHz, allowing pulses with higher pulse energy directly from the oscillator. If the repetition rate is reduced, the power consumption needed to amplify pulses to a pulse energy necessary for material processing is reduced, which is desired in order only to need a moderate power supply at low cost. However, common to all mode-locked lasers where CW lasing is needed to start the laser is that they do not achieve single pulse environmentally stable mode-locked operation with repetition rates in this regime. In order to lower the repetition rate, traditionally, in bulk amplified laser systems, this is obtained with pulse picking external to the master oscillator, but pulse picking also reduces the average power, which is a disadvantage. A higher average power from the oscillator is needed in fiber amplification systems, if Amplified Spontaneous Emission (ASE) is not to dominate the output.

In order to achieve low repetition rate operation (without pulse picking), the laser must be chosen to be long. Especially in long lasers, environmental stability is difficult to obtain, as longer fibers are more sensitive than short fibers. Also, long fibers increase the non-linear change to the pulse. The pulse may experience a large distortion every round trip. In this case, either a CW mode or a multi-pulse mode with several pulses per roundtrip time will easily be more favourable. The multi-pulse mode has lower pulse energy per pulse, and the spacing between the pulses may fluctuate. Hence it is in general not desirable. The multi-pulse mode is more easily exited if CW is also a good solution to the cavity, as new pulses may emerge out of fluctuations on a residual CW background to the mode-locked lasing. Such a residual CW background can coexist with a mode-locked mode if such a combination is a more favourable solution to the cavity than a solution where all the laser energy resides in the mode-locked mode alone. The presence of a residual CW background in the output is also unattractive if the laser is to be amplified to get larger pulse energies. The presence of the residual CW background will reduce the amplified pulse energy.

Suppressing CW lasing independently of mode-locked lasing, as it is achieved with the invention, solves or reduces all these problems. Even if the pulse experiences strong pulse distortions for every roundtrip due to non-linear effects such as Self-Phase Modulation, intra pulse Raman scattering, and solitonic non-linearities, only a single pulse may prevail if CW lasing is not possible.

It is a further object of the invention to provide an environmentally stable passively mode-locked waveguide laser with a relatively low repetition rate (e.g. 100-650 kHz) without the use of pulse picking. This enables amplification to desirable pulse energies (e.g. 200 µJ-2 mJ) with lower power consumption than if the repetition rate was in the order of 5-100MHz (obtainable with other known environmentally stable mode-locked fiber lasers). The object is obtained as described in the following.

An environmentally stable passively mode-locked waveguide laser with a relatively low repetition rate (e.g. 100-650kHz) can be obtained with an environmentally stable passively mode-locked waveguide laser, if a section of the waveguide between the two reflectors is chosen to be long, e.g. in the order of 150-1000m.

In a particular embodiment of the laser, the output from the laser may be chosen to be free of ASE (Amplified Spontaneous Emission) between pulses at the lasing wavelength.

In a particular embodiment, the gain medium comprises excitable material selected among the group of elements consisting of Holmium (Ho), Erbium (Er), Thulium (Tm), Ytterbium (Yb), Samarium (Sm), Neodymium (Nd) and Praseodymium (Pr). In a practical embodiment, the gain medium is a doped fiber.

Self Phase Modulation (SPM) leads to spectral broadening, and one of the problems is to avoid the increased spectral width of the pulse. Spectral filtering can be used to obtain eliminate the increase of the bandwidth (cf. e.g. H. A. Haus et al. in "Structures for additive pulse mode locking", J. Opt. Soc. Am. B, Vol. 8, No. 10 (1991) pp. 2068-2076). Spectral filtering will only increase the loss for mode-locked lasing and not for CW lasing. This implies for prior art laser systems, that it is more difficult to sustain a mode-locked lasing as a more stable solution than a CW solution. However, according to the invention, CW lasing has been suppressed and, thus, spectral filtering is no longer a problem.

Further, exemplary embodiments can include strong spectral filtering in the reflectors and/or other elements of the laser, which can help eliminating an increase in the spectral bandwidth of the pulse, also may be used to help shaping the pulse and give it attractive characteristics. For example, the pulse chirp is also a function of the bandwidth of the cavity (cf. e.g. H. A. Haus et al. in "Structures for additive pulse mode locking", J. Opt. Soc. Am. B, Vol. 8, No. 10 (1991) pp. 2068-2076). Intra-cavity dispersion compensation can be omitted in the presence of strong spectral filtering, while maintaining a mode-locked pulse as solution to the cavity.

In a particular embodiment, the frequency discriminating feedback element comprises a Bragg grating. The Bragg grating may be written in an optical fiber, e.g. by exposing the fiber to UV light through a phase mask. Further, Fiber Bragg gratings usually have a bandwidth of less then a few nanometers, and hence the Fiber Bragg grating may act as a strong spectral filter.

Distortions of the pulse due to non-linearities can be eliminated if the peak power is sufficiently low. This can be obtained if the pulse is highly chirped. This can be achieved if the cavity has a large normal dispersion in total. If the waveguide only comprises normal dispersive components, and if the pulse is allowed to monotonically increase in chirp inside the laser, and only compressed through spectral filtering, wave breaking can be avoided (cf. D. Anderson, et al. in "Wave-breaking-free pulses in nonlinear-optical fibers", J. Opt. Soc. Am. B, Vol. 10, No. 7 (1993) pp. 1185-1190). If the gain medium is normal dispersive, a parabolic pulse can be created in this part of the cavity (cf. M. E. Fermann et al. in "Self-Similar Propagation and Amplification of Parabolic Pulses in Optical Fibers", Phys. Rev. Lett., Vol. 84, No. 26 (2000) pp. 6010-6013), and a parabolic pulse may propagate self-similar through the rest of the cavity if this also only comprises normal dispersive fiber(cf. D. Anderson, et al. in "Wave-breaking-free pulses in nonlinear-optical fibers", J. Opt. Soc. Am. B, Vol. 10, No. 7 (1993) pp. 1185-1190). The spectral filtering in the reflectors and/or other elements of the laser, gives the possibility of self-similar pulse evolution inside the cavity, where the pulse chirp and pulse width monotonically increases as the pulse propagates inside the cavity, until it reaches the spectral filter where it is again compressed (cf. e.g. F. Ö. Ilday et al. in "Self-Similar Evolution of Parabolic Pulses in a Laser", Phys. Rev. Lett., 92, 213902 (2004)). This solution also has the advantage, that the generated pulses are highly linearly chirped, and can hence be amplified and compressed without the need of initial stretching in a chirped pulse amplifier. Therefore in a further embodiment of the invention, the method comprises generating parabolic pulses in the gain medium for self-similar propagation in the waveguide to achieve self-similar mode-locked lasing without wave breaking and pulse distortions due to non-linearity.

Further objects of the invention are achieved by the embodiments defined in the dependent claims and in the detailed description of the invention.

The invention may e.g. be useful in areas such as laser surgery, laser marking, and laser micro machining, where a laser with relatively high peak power and/or relatively high pulse energy is needed.

### BRIEF DESCRIPTION OF DRAWINGS

The invention will be explained in more detail in connection with a preferred embodiment and with reference to the drawings in which:
FIG. 1 shows an exemplary embodiment of the present invention.
FIG. 2 shows an alternative embodiment in which a ring interferometer has been included to aid the initial passive Q-switching mechanism. In addition, a broadband mirror has replaced the grating.
FIG. 3 shows an alternate embodiment in witch a strong saturable absorber is used as the mechanism to prevent lasing at low powers.
FIG. 4 shows a typical Q-switched pulse, and the remaining part of it after one roundtrip. The pulse had a peak power below the predetermined threshold, and hence a mode-locked pulse train was not obtained from this pulse, as the second pulse did not experience an effective amplification.
FIG. 5 shows the output power at both ends of the laser.
FIG. 6 shows a pulse spectrum obtained after the L2 fiber.
FIG. 7 shows a pulse spectrum after the grating
FIG. 8 shows a pulse train of the mode-locked output.
FIG. 9 illustrates the reflectivity of the non-linear optical reflector,
FIG. 10 illustrates the energy dynamics in the gain medium during start up of the laser.

### MODES FOR CARRYING OUT THE INVENTION

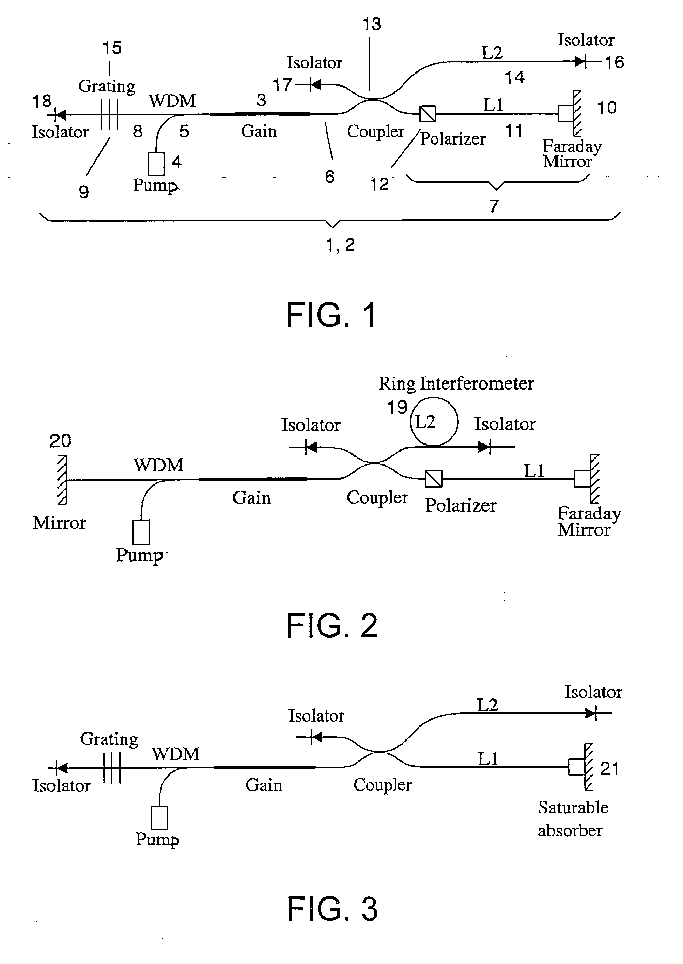

FIG. 1 shows an exemplary embodiment of a laser system 1 according to the invention. The laser system 1 includes an optical waveguide 2 for propagating light along a longitudinal axis of the waveguide 2. A gain medium 3 is arranged over a length of the optical waveguide 2. The gain medium 3 receives power in the form of pumping light through a light guide connection 5 including a Wavelength Division Multiplexer (WDM) from pumping means, which in short is denoted pump 4. The pump 4 is of a well-known type and can produce light by electrical discharge. The received pump light in the gain medium 3 results in emission of light from the gain medium 3 at the emission wavelength of the gain medium into the remaining optical waveguide. The remaining optical waveguide comprises a fibre 6 from the gain medium 3 to the first reflector 7 and a second fibre 8 from the gain medium 3 to the second reflector 9, wherein the laser activity can occur in the laser cavity between the two reflectors 7,9.

The first reflector 7 is a non-linear optical power reflector with a reflectivity increasing with the power level of the impinging light, and with a low reflectivity, for example almost zero, for light of a low power, whereas the reflectivity changes to a substantial amount at high light power levels. This implies that only light pulses that have a high power can lead to lasing in the laser system.

A coupler 13 and a second long piece of fiber 14, L2, create the mechanism to start the laser through passive Q-switching when combined with the long piece of fiber 11, L1.

Laser light is extracted from the laser cavity 2 through one of the isolators 16, 17, 18.

A fiber Bragg Grating 15 is included as a second reflector and as a spectral filter for the laser light. Alternatively, as shown in FIG. 2, a butt coupled bulk mirror 20 could be used as the second reflector.

In the FIG. 1 and FIG. 2 preferred embodiments, the mode-locking mechanism is based on non-linear polarization rotation in a piece of fiber 11, L1, between a Faraday mirror 10 and a polarizer 12. Light reflected from a Faraday mirror 10 has the property that it is orthogonally polarized to the light sent into the Faraday mirror 10. If a Faraday mirror 10 is combined with an arbitrary birefringent medium 11 (e.g. a non-PM or a PM fiber), in which the incoming light has had an arbitrary polarization evolution, the light reflected back through the birefringent medium 11 will at any point along the medium 11 be polarized orthogonal to the light propagating in the opposite direction. This effect is disclosed by M. Martinelli et al. in "A universal compensator for polarization changes induced by birefringence on a retracing beam", Opt. Comm., Vol. 72, No. 6 (1989) pp. 341-344.

However, this result is only true as long as the light power impinging on the Faraday mirror 10 is so low, that no non-linear polarization evolution takes place in the birefringent medium 11. Thus, if a polarizer is combined with an arbitrary birefringent medium and a Faraday mirror, it will work as a non-reflector in the case of low power. On the other hand, if the arbitrary birefringent medium is a piece of fiber 11 where non-linear polarization evolution can take place, the reflection from the Faraday mirror 10 combined with the polarizer 12 will in general be non-zero at high power levels. This effect is disclosed by C. Vinegoni et al. in "Measurements of non-linear polarization rotation in a highly birefringent optical fibre using a Faraday mirror", J. Opt. A:Pure Appl. Opt., Vol. 2 (2000) pp. 314-318).

Hence, the configuration of the second reflector 7 including a Faraday mirror 10, a polariser 12 and a fibre 11 in between the Faraday mirror 10 and the polariser 12 can work as a non-linear mirror with vanishing reflection at low powers and with increasing reflectivity as the power increases. In connection with the invention, this is used to suppress lasing at low light power, especially to suppress lasing at continuous wave (CW) modes. The light power is dependent on the pump power and the efficiency of the gain medium 3. In practice, this suppression is achieved by limiting the power that is pumped into the gain medium 3. In order to prevent CW lasing, the combination of the pump 4, the optical waveguide 2 with the gain medium 3, and the first and second reflectors 7, 9 are configured to have a power gain that is smaller than the power loss at power levels corresponding to CW lasing modes,

How low a reflectivity of the first reflector 7 is needed for suppression of CW modes depends on the pump power and the gain medium 3, and can be calculated with standard methods of laser simulations using rate equations, for example as disclosed by A. Ghatak et al. in "Introduction to fiber optics" Academic Press, 1998 or by Raymond J. Beach et al. in "Narrow-line Ytterbium fiber master-oscillator power amplifier", J. Opt. Soc. Am. B, Vol. 19, No. 5 (2002) pp. 981-991.

The non-linear polarization evolution in the second reflector 7 is chosen to enable a reflectivity increasing with the power level of impinging light. The reflectivity should be so high at power levels above a predetermined threshold power that lasing in a mode-locked mode with high peak power is possible. The predetermined threshold should be chosen to be above any power level obtainable in a CW mode of the laser given the pump power, the gain and the losses of the cavity, so that it is not possible for such a mode to experience effective amplification after one roundtrip.

In other words, the combination of the pump 4, the optical waveguide 2 with the gain medium 3, and the first and second reflectors 7, 9 is configured to have a power gain that is lower than the power loss for power levels corresponding to CW modes, and the combination is configured to have a power gain that is higher than the power loss at power levels above the predetermined threshold value. This way, CW lasing is suppressed, but mode-locked lasing is possible.

In the FIG. 3 preferred embodiment, the mode-locking mechanism is based on a saturable absorber mirror 21 as the first reflector 7, the absorber mirror having a reflectivity low enough at low power levels to suppress CW lasing. The saturable absorber mirror 21 is further characterized by a reflectivity increasing with the power level of impinging light. The reflectivity should be so high at power levels above the predetermined threshold power, that lasing in a mode-locked mode with high peak power is possible.

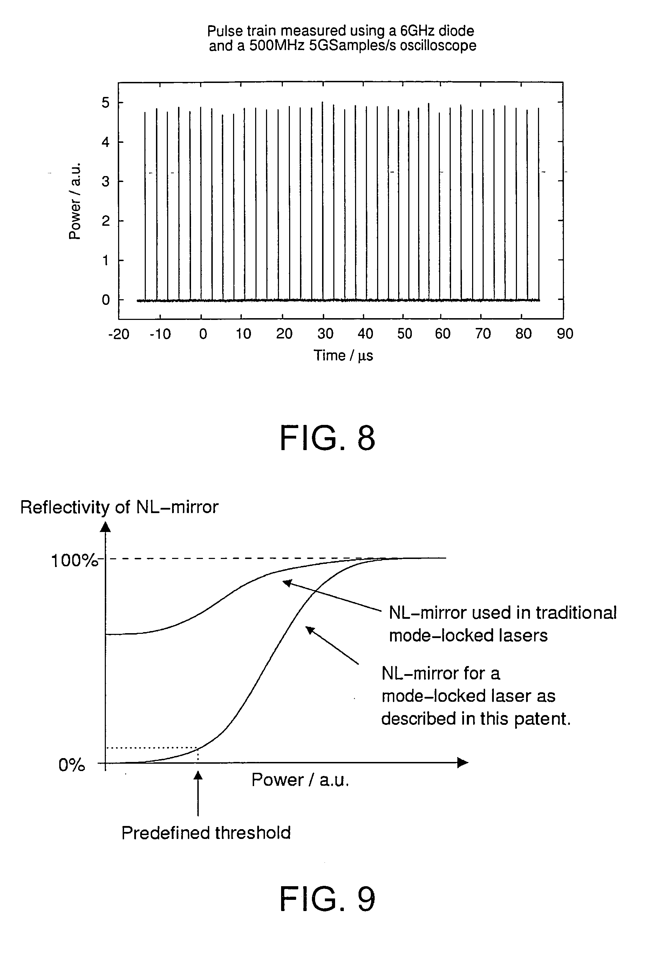

A schematic diagram of the ideal power dependent reflection from the non-linear mirror 7 is illustrated in FIG. 9, where the reflectivity increases from zero to 100%. Also the diagram shows the power dependent reflection from a typical non-linear mirror used in prior art mode-locked lasers, where the lowest reflectivity is in the order of 40%-95% in order to have CW lasing as a good solution to the cavity. An ideal reflector can be accomplished by the aforementioned combination of a polariser 12 and a Faraday mirror 10 or by a suitably produced SESAM. A lowest reflectivity of more than zero can also be accepted in connection with the invention. However, it is required that the reflectivity is so low that CW lasing cannot take place. The possibility for CW lasing is dependent on the loss in the cavity, the gain medium and the pumping of the gain medium, why the lowest acceptable reflectivity of the reflector has been configured in dependence of these factors. In the figure, a predefined threshold is indicated for illustration. For light with a power below the threshold level, CW lasing is not possible. However, for pulses with a peak power above the threshold level, the reflection from the mirror is sufficient to initiate and sustain lasing. In accordance with the invention, the threshold value is chosen to be above the light power associated with all possible CW modes.

In the shown embodiment, the optical waveguide 2 comprises optical fibers and fiber pigtailed components. As light in the laser cavity only propagates through fibres without any air section, the laser system according to the invention is environmentally very stable, and no frequent cleaning is necessary. Further, in the preferred embodiment, the gain medium 3 comprises a piece of rare-earth-doped fiber. In an exemplary embodiment ~2-3 m of Ytterbium doped fiber with a peak absorption at 976 nm of 200-300 dB/m or ~6-10m of Erbium doped fiber with a peak absorption at 1530 nm of 15-25 dB/m, may be used, but any other rare-earth-doped fibers, such as fibers doped with e.g. Neodymium or Thulium can be used. In an exemplary embodiment of the laser the gain medium 3 can be pumped with a 300 mW, 980 nm diode laser through a WDM 5.

As the CW lasing mode is suppressed, it cannot be used to start mode-locked lasing. Therefore, the invention utilises a configuration causing initial passive Q-switching to start the laser. Passive Q-switching can be obtained even at very low pump powers if the reflection from one end of a fiber laser cavity is suppressed. With reference to FIG. 1, the reflection in the L2 fibre 14 is suppressed by isolator 16. This passive Q-switching effect is disclosed by A. A. Fotiadi et al. in "The Effect of Passive Q-switching Observed in an Erbium-Doped Fiber Laser at a Low Pumping Power", Tech. Phys. Lett., Vol. 27, No. 5 (2001) pp. 434-436, or by A. A. Fotiadi et al. in "Dynamics of a self-Q-switched fiber laser with a Rayleigh-stimulated Brillouin scattering ring mirror", Opt. Lett., Vol. 29, No. 10 (2004) pp. 1078-1080. In both references, the mechanism was found to depend on Rayleigh Backscattering (RB) and Stimulated Brillouin Scattering (SBS) at the resonances frequencies of a ring interferometer. A ring Interferometer 19 is shown in FIG. 2 and may as well be employed in FIG. 1.

However, passive Q-switching can also be obtained without the use of a ring interferometer 19. For example, as shown in FIG. 1, a 20:80 coupler 13 is inserted before the polarizer 12, coupling 20% from the main cavity 7, 6, 3, 8, 15 into another piece of fiber 14, L2. An isolator 16 to suppress reflections from the end terminates the L2 fiber 14. The isolators 16, 17, 18 in the figures of the exemplary embodiments of FIG. 1 through FIG. 3 may all be replaced by other means of preventing back reflection, such as e.g. an angle cleaved fiber end or a Fiber Cable-Angle Polished Connector (FC-APC).

The passive Q-switching mechanism is believed to originate from interference between RB and SBS light from the two arms L2 14 and L1 11 at the coupler 13. If standard fibers are used, fiber lengths in the order 200-1000 m for both the L1 and L2 fiber are preferable to obtain sufficient RB and SBS light for passive Q-switching to take place. Longer or shorter fibers can also be used, where for shorter fibers, it is of advantage to have higher RB and SBS coefficients than standard fibers, and for longer fibers, it is advantageous to have smaller RB and SBS coefficients.

The RB coefficient of the fibers is proportional to the linear loss of the fiber (due to Rayleigh scattering), and to the capture fraction of the scattered light into the opposite direction of the fiber. The total average reflection is approximately equal to the RB coefficient multipled by the length of the fiber, but because RB feedback is a stochastically process and because light reflected at one point along the fiber is not phase matched to light reflected at another point, RB cannot produce stable CW lasing, but only give rise to a fluctuating feedback mechanism.

As the gain medium 3 gets almost depleted by the Q-switched pulse, the length of the fiber L1 14 should also be chosen so long that a pulse does not return before the pump 4 has transferred substantial energy to the gain medium 3, because in order for lasing to occur, there should be enough energy in the gain medium for a further increment of the power, once the Q-switched pulse returns from the first reflector 7. In an exemplary embodiment where a 300 mW pump and 6 m of Er-doped fiber (peak absorption of 15 dB/m at 1530 nm) is used, a length above 150 m-200 m is enough to ensure this.

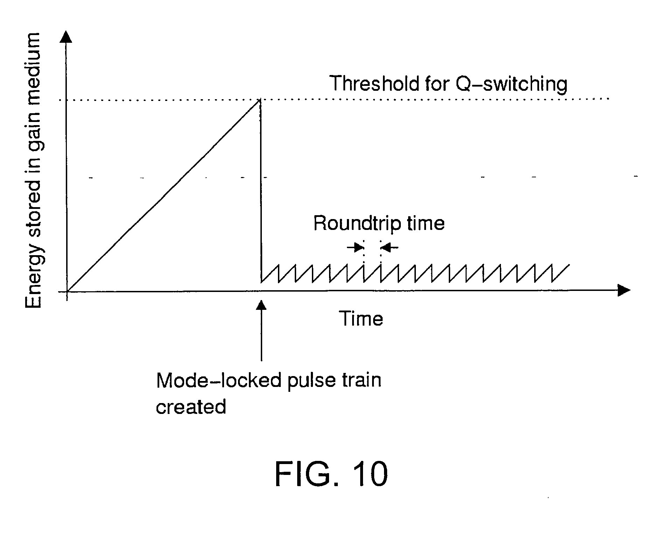

FIG. 10 illustrates the energy dynamics of the gain medium 3 during start of the laser. Initially, energy, for example in the form of infrared light, is pumped into the gain medium to build up increasing energy storage in the gain medium. During this built up, spontaneous emitted photons from the gain medium 3 propagate into the fibers 6, 11 and 14, from which RB and SBS causes a fluctuating reflection of these photons back into the gain medium 3. When the threshold for Q-switching is reached, such a fluctuating feedback evolves into a Q-switched pulse almost emptying the gain medium 3 for energy. The created pulse propagates through the fiber 6 into the non-linear reflector 7. As the pulse has a high power, it is reflected from the non-linear mirror back into the gain medium 3. During the propagation roundtrip time to the Faraday mirror or saturable absorber and back again, new energy builds up inside the gain medium 3. The pulse drains part of the energy in the gain medium and increases in intensity, and a new roundtrip starts such that a mode-locked lasing is started. In this way, the energy level does not reach the Q-switching threshold such that Q-switching is suppressed as soon as mode-locked lasing has begun.

The passive Q-switching mechanism can be enhanced if a ring interferometer 19 is included in the cavity, as also discussed by A. A. Fotiadi et al. in "Dynamics of a self-Q-switched fiber laser with a Rayleigh-stimulated Brillouin scattering ring mirror", Opt. Lett., Vol. 29, No. 10 (2004) pp. 1078-1080 and included in the embodiment of FIG. 2. With the use of the ring interferometer, passive Q-switching can be obtained for much shorter lengths of fibers 14, L2, because a multiple path of light in the ring corresponds to a long fibre.

In the preferred embodiments of FIG. 1 and FIG. 3, a fiber Bragg Grating 15 is used as a strong spectral filter to remove the additional spectral bandwidth gained during only one roundtrip in the cavity due to Self Phase Modulation and Intra Pulse Raman Amplification. The second reflector being a grating 15 is positioned on the opposite side of the gain medium 3 as the Faraday Mirror and acts as the other cavity mirror. In an exemplary embodiment the grating may have a width of 0.75 nm, a peak reflectivity of 80%, and a central wavelength of 1550 nm in correspondence with a Erbium based gain medium 3. Alternatively, other means for reflecting light such as bulk or thin-film mirrors can be used.

The preferred embodiment of FIG. 2 contains a bulk mirror 20 butt coupled to the fiber 8 instead of the fiber Bragg Grating 18. The function of strong spectral filtering - if desired - need not be located in the means for reflecting the light back into the cavity, but could also be located in other components of the laser. Thus, the Bragg grating 18 in the embodiments of FIG. 1 and FIG. 3 may be substituted by a bulk mirror.

Notice also that the central wavelength of the Faraday Mirror 10 is advantageously chosen in accordance with the bandwidth of the second reflector 15, 20 from the opposite side of the gain, for example the fiber Bragg Grating 15, and in accordance with the bandwidth of the gain medium 3. Further, in a preferred embodiment, the bandwidth of the Faraday Mirror 10, over which it produces a polarization rotation of 90 degrees, is sufficiently large compared to the bandwidth of the rest of the laser so that CW lasing is sufficiently suppressed at all wavelengths.

The stability of the mode-locking mechanism depends on how the laser is implemented. The non-linear polarization evolution in a fiber 11 between a Faraday mirror 10 and a polarizer 12 does depend on the local polarization state, and hence a change in the fiber birefringence (e.g. induced by a change in temperature or the stress on the fiber) will affect the non-linear polarization evolution in the fiber and hence also the reflection from the non-linear mirror 7. If the fiber 11 between the polarizer 12 and the Faraday mirror 10 is a piece of highly birefringent fiber with its main axis at a nonzero angle to the axis of the polarizer - an angle of e.g. 40 deg. may be chosen - the polarization state due to the linear polarization evolution in the fiber will change rapidly along the fiber. Hence the change in the local polarization state due to a small environmentally induced change in the birefringence - small compared to the intrinsic birefringence - will only give a small change in the total polarization evolution. The small change in the local polarization state will be averaged out due to the strong linear polarization evolution in the fiber. Hence the output from the non-linear mirror 7 is also environmentally stable if the fiber between the polarizer 12 and the Faraday mirror 10 is chosen to be birefringent (cf. e.g. US patent No. 5,689,519 and 5,923,686 by Fermann and Harter assigned to IMRA). An exemplary embodiment of the laser in FIG. 1 and FIG. 2 comprises advantageously a PM fiber not only between the polarizer 12 and the Faraday Mirror 10 and further PM fibers in the main part of the cavity (including gain medium 3, WDM 5, coupler 13, polarizer 12 and grating 15) to suppress environmentally induced polarization evolution in this part of the cavity.

Exemplary embodiment of the FIG. 3 preferred embodiment advantageously includes PM fibers in all sections of the cavity located between the grating and the saturable absorber mirror 21, and further the exemplary embodiment includes a polarization dependent loss (located in e.g. the coupler) to suppress lasing in the fast axes of the PM fiber.

The preferred embodiments of FIG. 1, FIG. 2 and FIG. 3 may also all be constructed using non-PM fibers. In this case, for the FIG. 1 and FIG. 2 embodiments, a wave plate is needed between the polarizer 12 and the Faraday mirror 10 to change the polarization state away from linearly polarized light. Non-linear polarization evolution can only take place if the polarization state is different from linear as discussed by H. A. Haus et al. in "Additive-Pulse Modelocking in Fiber Lasers", IEEE J. Quant. Elect., Vol. 30, No. 1 (1994) pp. 200-208. In an exemplary embodiment of the laser, the wave plate is implemented as a loop on the fiber. If two loops of diameter 34mm are used, this arrangement functions as a quarter wave plate at 1550nm, and if two loops of diameter of 50mm are used, it functions as a quarter wave plate at 1060nm.

As illustration of the starting mechanism and of the suppressed environmentally sensitivity of losing mode-locked lasing to CW lasing, an Erbium based version of the mode-locked laser was created corresponding to the diagram shown in FIG. 1. The laser was constructed with non-PM standard fibers. Even though not total environmental stability toward changes of the polarization evolution had been obtained for this laser, this configuration was still a major improvement relative to prior art. Because CW operation is not allowed by the configuration, mode-locked operation does not cease even though the fibers are twisted and bent during mode-locked lasing.

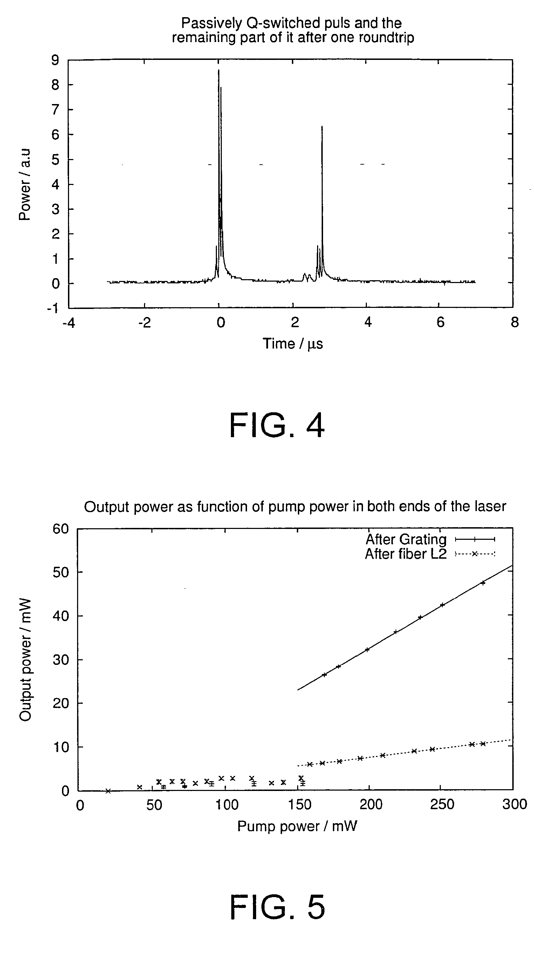

The following components may e.g. be used to implement the exemplary embodiment of the invention, which is based on non-PM components. The experimentally obtained data shown in Fig. 4-8 has been obtained with a laser based on these components.

| **Component** | **Characteristics** | **Type-name** | **Producer** | **Home page** |
|---|---|---|---|---|
| PM fiber L1 | 250 m | Standard fiber | OFS | http://www.ofsoptics.com/ |
| PM fiber L2 | 200 m | Standard fiber | OFS | http://www.ofsoptics.com/ |
| Gain fiber | 6 m Erbium doped (peak absorption 15dB/m @ 1530nm) | R37005 | OFS | http://www.ofsoptics.com/ |
| Faraday mirror | Wavelength range 1550±50nm 90 deg rotation. | F-FRM-2-JK-NC | Newport | http://www.newport.com/ |
| Polarizer | | Ilp-30-15-SS-1-0 | Intelmac | http://www.intelmac.com/ |
| Isolator | | WBC-22-155-30-1-025-00-A | Accelink | http://www.accelink.com/ |
| Coupler | 20:80 | ISO-PIS-155-P-09-1-00 | Accelink | http://www.accelink.com/ |
| WDM | | FFW- | JDS | http://www.jdsu.com/ |
| | | 5C31A2210 | Uniphase | |
| Pump laser | 300mW @ 980nm | | Bookham | http://www.bookham.com/ |
| Grating | Bandwidth = 0.75nm @ 1550 nm | | | |

When the pump power is turned on, the laser initially starts to passively Q-switch, generating nanosecond pulses with fluctuating peak powers and repetition rates of 10±5kHz depending on the pump power.

In FIG. 4, an example of a pulse in the laser system according to the invention is shown. Separated by one roundtrip time from the initial pulse, another pulse corresponding to the remaining part of the initial pulse can be seen. The amplitude of the 2nd pulse depends on the amplitude of the initial pulse. If the amplitude of the initial pulse exceeds a certain threshold, the 2nd pulse has large enough amplitude to evolve into a stable mode-locked pulse. A mode-locked pulse train was not created with this pulse. In FIG. 5, the average output power from the laser in both ends can be seen. The threshold for mode-locking is clearly observed around ~160 mW.

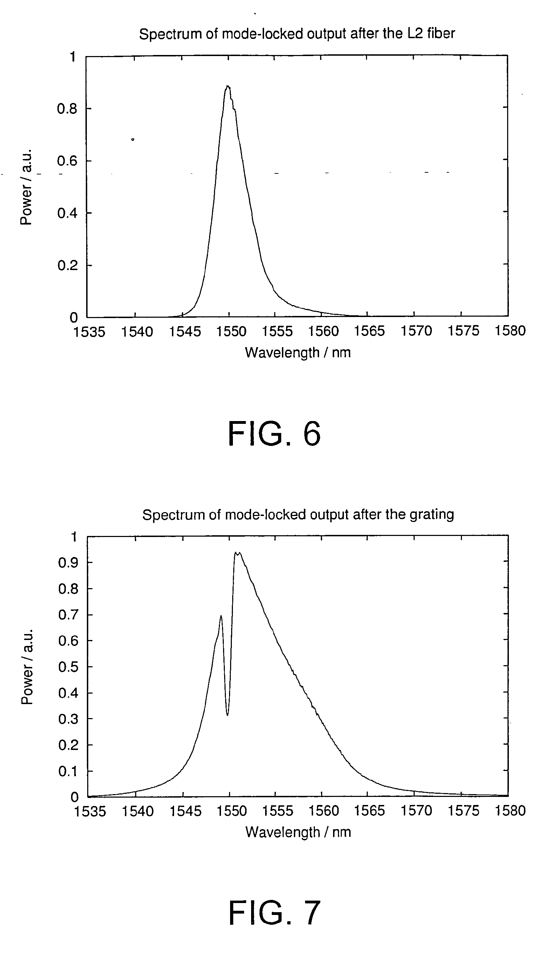

In FIG. 6 and FIG. 7, the pulse spectra at both ends of the exemplary embodiment of the laser of FIG. 1 can be seen. The large dip in the spectrum in FIG. 7 taken after the grating is due to that part of the spectrum that has been reflected back into the cavity again. It is clearly seen that the grating works as a very strong spectral filter to the pulse.

In FIG. 8, a pulse train of the output pulses from the exemplary embodiment of the laser of FIG. 1 can be seen. The repetition rate is very stable, but in the experiments, fluctuations in the order of ~2% of the pulse energy were observed due to the non-linear solitonic processes involved in the pulse evolution inside the cavity. Standard fibers are anormalous dispersive at the lasing wavelength of Erbium. Hence, the pulse undergoes strong pulse distortions at every roundtrip due to solitonic non-linearities. Solitonic non-linearities can only be avoided if the fiber is normal dispersive. This can be obtained if the laser medium is chosen to be e.g. an Ytterbium doped fiber instead. Despite the strong pulse distortions and following fluctuations in pulse energy from roundtrip to roundtrip, the single-pulse operation does not cease, because of the absence of a CW solution to the cavity.

If the waveguide only comprises normal dispersive components, and if the pulse is allowed to monotonically increase in chirp inside the laser, and only compressed through spectral filtering, wave breaking can be avoided (cf. D. Anderson, et al. in "Wave-breaking-free pulses in nonlinear-optical fibers", J. Opt. Soc. Am. B, Vol. 10, No. 7 (1993) pp. 1185-1190). If the gain medium is normal dispersive, a parabolic pulse can be created in this part of the cavity (cf. M. E. Fermann et al. in "Self-Similar Propagation and Amplification of Parabolic Pulses in Optical Fibers", Phys. Rev. Lett., Vol. 84, No. 26 (2000) pp. 6010-6013), and a parabolic pulse may propagate self-similar through the rest of the cavity if this also only comprises normal dispersive fiber. (cf. D. Anderson, et al. in "Wave-breaking-free pulses in nonlinear-optical fibers", J. Opt. Soc. Am. B, Vol. 10, No. 7 (1993) pp. 1185-1190). The spectral filtering in the reflectors and/or other elements of the laser, gives the possibility of self-similar pulse evolution inside the cavity, where the pulse chirp and pulse width monotonically increases as the pulse propagates inside the cavity, until it reaches the spectral filter where it is again compressed (cf. e.g. F. Ö. Ilday et al. in "Self-Similar Evolution of Parabolic Pulses in a Laser", Phys. Rev. Lett., 92, 213902 (2004)). This solution also has the advantage, that the generated pulses are highly linearly chirped, and can hence be amplified and compressed without the need of initial stretching in a chirped pulse amplifier.

The repetition rate of the laser is 368 kHz, and no tendency to lase in a mode with several pulses per roundtrip time period has been observed. This implies a relatively low repetition rate with high energy pulses. This is in line with the demand from industry, where high pulse energy is desired in order to use such lasers for industrial applications as ablation and laser cutting, but where low repetition rates are desired in order to reduce the overall demands for the necessary power generators.

If the output of the exemplary embodiments of the lasers in the FIG. 1 and FIG. 2 is taken at isolator 17 in the direction coming from the Faraday mirror 10, residual ASE from the gain medium will also have been removed in between the pulses.

The following components may be used to implement an exemplary embodiment of the invention corresponding to the diagram of FIG. 2. The fibers are chosen to be PM fibers to achieve environmental stability towards changes of the polarization evolution, in addition to the stability towards loosing mode-locked lasing to CW lasing as the most favourable solution:

| **Component** | **Characteristics** | **Type-name** | **Producer** | **Home page** |
|---|---|---|---|---|
| PM fiber L1 | 100 m PM fiber | PM980-HP | Thorlabs | http://thorlabs.com/ |
| PM fiber L2 | 100 m PM fiber | PM980-HP | Thorlabs | http://thorlabs.com/ |
| Gain fiber | 3 m PM Ytterbium doped fiber (peak absorption = 200 dB/m) | | | |
| Faraday mirror | Connector fiber: Panda 980 | PMFM-06-N-B-Q | AFW | http://www.ausfibreworks.com/ |
| Polarizer | Connector fiber: Panda 980 | ILP-06-N-B-1-Q | AFW | http://www.ausfibreworks.com/ |
| Isolator | Connector fiber: Panda 980 | PMI-06-1-P-N-B-Q | AFW | http://www.ausfibreworks.com/ |
| Coupler | 20:80. Connector fiber: Panda 980 | PMFC-06-2-20-N-B-P-Q-F | AFW | http://www.ausfibreworks.com/ |
| WDM | Connector fiber: Panda 980 | PMFWDM-9806-N-B-Q | AFW | http://www.ausfibreworks.com/ |
| Pump laser | 300mW @ 980nm | | Bookham | http://bookham.com/ |
| Cavity end mirror | Bandwidth = 10nm @ 1060nm | | | |

## Claims

**1.** A passively mode-locked laser system (1) comprising
- an optical waveguide (2) for propagating light along a longitudinal axis of the waveguide,
- a gain medium (3) over a length of the optical waveguide (2) for emitting light in the optical waveguide (2) in response to stimulation by pump light,
- a pump (4) for generating energy in the form of pump light, the pump optically connected to the gain medium (3) for transfer of pump light into the gain medium (3),
- a laser cavity enclosing the gain medium (3) between a first (7) and a second reflector (9),
- at least the first reflector (7) being a non-linear optical power reflector with a reflectivity increasing with the power level of the impinging light,
- the pump (4), the optical waveguide (2) with the gain medium (3), and the first (7) and second (9) reflectors being configured in combination to have a power gain that is smaller than the power loss at power levels corresponding to CW lasing modes in order to prevent CW lasing,
- means for generating a light pulse without the presence of CW lasing, the light pulse having a peak power above a predetermined threshold value,
- the pump (4), the optical waveguide (2) with the gain medium (3), and the first (7) and second (9) reflectors being configured in combination to have a power gain which is higher than the power loss at power levels above the predetermined threshold value in order to provide mode-locked lasing,
- the means for generating a light pulse being configured to cease generation of light pulses in the presence of mode-locked lasing.

**2.** A laser system (1) according to claim 1, wherein the waveguide (2) is air-free, and where the waveguide (2) only consists of fibers and fiber pigtailed components.

**3.** A laser system (1) according to claim 2, wherein the gain medium (3) is optically connected to the first (7) and second (9) reflector through optical fibers and fiber pigtailed components.

**4.** A laser system according to any one of claims 1-3 wherein said means of generating a light pulse without the presence of CW lasing comprises at least one length of optical fiber configured for generation of Stimulated Brillouin Scattering (SBS) and Rayleigh Backscattering (RB), the optical fiber being optically coupled to the waveguide.

**5.** A laser system (1) according to claim 4 where said means of generating a light pulse without the presence of CW lasing further comprises an optical element for creating interference between several SBS and RB generating elements.

**6.** A laser system (1) according to claim 5 where said optical element for creating interference comprises a coupler (13) or a ring interferomenter (19) or both.

**8.** A laser system (1) according to any one of claims 1-7 wherein said gain medium (3) comprises excitable material selected among the group of elements consisting of Holmium (Ho), Erbium (Er), Thulium (Tm), Ytterbium (Yb), Samarium (Sm), Neodymium (Nd) and Praseodymium (Pr).

**9.** A laser system (1) according to any one of claims 1-9 wherein said non-linear optical reflector (7) comprises a Faraday Mirror (10), a linear polarizer (12), and a birefringent non-linear optical power medium (11) between the Faraday mirror (10) and the polariser (12).

**10.** A laser system (1) according to claim 9, wherein said birefringent non-linear optical power medium comprises a highly birefringent optical fiber (11) with its axis oriented at a nonzero angle to the axis of the polarizer (12).

**11.** A laser system (1) according to claim 10, wherein all fibers (3), (6), (8), (14) in the waveguide (1) are PM fibers for maintaining linear polarisation of the light in all sections except in the non-linear optical element in order to obtain environmental stability towards changes of the polarization evolution.

**12.** A laser system (1) according to claim 9 wherein said birefringent non-linear optical element comprises a non-PM optical fiber and a wave plate.

**13.** A laser system (1) according to any one of claims 1-8, wherein said non-linear optical element comprises a saturable absorber with a reflectivity that is dependent on the power of the impinging pulses.

**14.** A laser system (1) according to claim 13, wherein the cavity comprises a polarisation selecting element and all fibers in the waveguide (3), (6), (8), (11), (14) are PM fibers for maintaining linear polarisation of the light in order to obtain environmental stability towards changes of the polarization evolution.

**15.** A laser system (1) according to any one of claims 1-14 wherein a section of said waveguide (2) between the two reflectors is chosen to have a length in the range of 150-1000m long, in order to achieve a repetition rate in the range of 100-650kHz.

**16.** A laser system (1) according to any one of claims 1-15 wherein at least one of said reflectors (7), (9) comprises a Bragg grating (15).

**17.** A laser system (1) according to any one of claims 1-15 wherein at least one of said reflectors (7), (9) comprises a bulk mirror (20).

**18.** A laser system (1) according to any one of claims 1-17, further comprising a strong spectral filter.

**19.** A laser system (1) according to any one of claims 1-18 where said waveguide (2) is normal dispersive.

**20.** A laser system (1) according to claim 19 where the said gain medium (3) is adapted to self-similarly generate parabolic pulses and that the remaining part of the waveguide (2) is adapted for self-similar propagation, allowing self-similar mode-locked lasing without wave breaking and pulse distortions due to non-linearity.

**21.** Method for generating pulsed laser light, providing a passively mode-locked laser system comprising
- an optical waveguide (2) for propagation of light along a longitudinal axis of the waveguide (2),
- a gain medium (3) over a length of the optical waveguide (2),
- a laser cavity enclosing the gain medium (3) between a first (7) and a second reflector (9),
- at least the first reflector (7) being a non-linear optical power reflector with a reflectivity increasing with the power level of the impinging light, the method comprising
- pumping the gain medium (3) by light from a pump (4) for stimulated emission of light into the optical waveguide (2),
- preventing CW lasing by providing a power gain in the laser system that on the one hand is smaller than the power loss at light power levels corresponding to CW lasing modes, including a non-linear power loss at the first reflector, and that on the other hand is higher than the power loss at light power levels above a predetermined threshold value,
- generating a light pulse without the presence of CW lasing, the light pulse having a peak power above the predetermined threshold value in order to provide mode-locked lasing.

**22.** A method according to claim 21, wherein said generating a light pulse without the presence of CW lasing is achieved by accumulating energy in said gain medium (3) to an amount that gives rise to a total optical gain in said gain medium (3) which is equal to or above the gain needed to generate a pulse through passive Q-switching.

**23.** A method according to claim 22, wherein said generated laser pulse is reflected from the first reflector and wherein the laser pulse has a peak power for which said non-linear optical element has a reflectivity at a level that enables the evolution of said laser pulse into a mode-locked pulse train.

**24.** A method according to claim 23, wherein the method comprises ceasing the generation of Q-switched light pulses in the presence of mode-locked lasing.

**25.** A method according to claim 24, wherein the ceasing of the generation of Q-switched light pulses in the presence of mode-locked lasing is obtained by preventing the energy accumulation in the gain medium to rise to or above the gain needed for generation of said Q-switched pulses.

**26.** A method according to any single of the claims 21-25, wherein said generating a light pulse without the presence of CW lasing is achieved by providing at least one length of optical fiber configured for generation of Rayleigh Backscattering (RB) and Stimulated Brillouin Scattering (SBS) into the gain medium (3).

**27.** A method according to claim 26, wherein said generating a light pulse without the presence of CW lasing comprises interference between several SBS and RB elements.

**28.** A method according to any single of the claims 21-27, wherein said method comprises generating parabolic pulses in the gain medium for self-similar propagation in the waveguide to achieve self-similar mode-locked lasing without wave breaking and pulse distortions due to non-linearity.

**29.** A method according to any single of the claims 21-28, wherein the method comprises the following sequence of events during start-up
- initiating the provision of pump light into the waveguide, while CW lasing is suppressed, to accumulate energy in the gain medium to an amount giving rise to a total optical gain of the gain medium above a gain level Go needed to initiate passive Q-switching;
- when the total gain of the gain medium has increased above the gain level Go, initiating passive Q-switching for creation of a mode-locked pulse train,
- when lasing has begun in form of a mode-locked pulse train, clamping the gain of the gain medium to a threshold level Gₜₕ for lasing, where Gₜₕ is smaller then Go to suppress passive Q-switching as soon as the mode-locked pulse train has been created.
